# EUROPÄISCHE PATENTSCHRIFT

(11) **EP 2 157 558 B1**
(45) Veröffentlichungstag und Bekanntmachung des Hinweises auf die Patenterteilung: **06.05.2015**
(21) Anmeldenummer: 08105079.1
(22) Anmeldetag: 19.08.2008
(51) Int. Cl.: G01S 17/02, G01S 17/42, G08G 1/054, G01S 13/42, G01S 13/92, G03B 15/02, G03B 15/16, G08G 1/017

(54) **Verfahren und Anordnung zur fotografischen Aufnahme eines zu erfassenden Fahrzeuges**
Method and device for photographing a vehicle
Procédé et dispositif pour photographier un véhicule

(43) Veröffentlichungstag der Anmeldung: 24.02.2010
(73) Patentinhaber: JENOPTIK Robot GmbH, 40789 Monheim am Rhein (DE)
(72) Erfinder: Preker, Michael, 50679 Köln (DE); Seidel, Wolfgang, 07749, Jena (DE); Dohmann, Bernhard, 40764 Langenfeld (DE)
(74) Vertreter: Schaller, Renate

(56) Entgegenhaltungen:
- WO-A-97/33262
- WO-A-03/100518
- DE-A1- 3 535 588
- DE-A1-102004 044 887
- DE-T2-602004 002 071

## Beschreibung

Die Erfindung betrifft ein Verfahren und eine Anordnung zur fotografischen Aufnahme eines zu erfassenden Fahrzeuges mittels einer Bildaufnahmeeinrichtung, insbesondere bei einer Geschwindigkeitsüberschreitung, einem Rotlichtverstoß oder einer Abstandsüberwachung, wobei eine Beleuchtungseinrichtung zur Ausleuchtung des Fahrzeuges während der Abbildung vorgesehen ist.

Die Erfassung von Verkehrsverstößen ist zu einer sicherheitsrelevanten Aufgabe geworden, die moderne Verkehrsüberwachungsanlagen zur Aufnahme der beteiligten Fahrzeuge erfordert. Um beispielsweise nach deutschem Recht mittels der Verkehrsfotografie ein juristisch verwertbares Dokument zu erhalten, muss neben den tatrelevanten Daten des Verkehrsverstoßes, wie Geschwindigkeit, Fahrtrichtung, Ort, Datum und Uhrzeit, ein Frontfoto des Fahrzeuges in guter Abbildungsqualität erstellt werden, auf dem der Fahrzeugführer und das Fahrzeugkennzeichen eindeutig erkennbar sind oder es werden wenigstens zwei Frontfotos erstellt, von denen in wenigstens einem der Fahrzeugführer und in wenigstens einem zweiten das Fahrzeugkennzeichen eindeutig erkennbar ist.

Bei mobilen Verkehrsüberwachungsanlagen zur Messung der Geschwindigkeit eines Fahrzeuges, wie sie beispielsweise in der EP 1 148 457 B1 der Anmelderin offenbart sind, ist eine feste Zuordnung zwischen einem Messsensor, beispielsweise einem Radar- oder Lasersensor, einer Bildaufnahmeeinrichtung (Fotokamera) und einer Beleuchtungseinrichtung mit Blitzlicht vorgesehen, wobei der Fotowinkelbereich mit dem Blitzlicht ausgeleuchtet wird. Die Ortslage des zu erfassenden Fahrzeuges ist bei der Feststellung des Verkehrsverstoßes, beispielsweise der Überschreitung der zulässigen Höchstgeschwindigkeit, nicht punktuell, sondern in Abhängigkeit der Geschwindigkeit und den Reflexionseigenschaften des Fahrzeuges einem variablen Bereich zuzuordnen. Bei ferner aus dem allgemeinen Stand der Technik bekannten stationären Systemen zur Überwachung mehrspuriger Fahrbahnen, ergeben sich aufgrund der in die einzelnen Fahrbahnspuren eingebrachten Sensoren, insbesondere Piezo-Sensoren oder Schleifenanordnungen, unterschiedliche Ortslagen der Fahrzeuge im Bild. Aufgrund der festen Zuordnung der optischen Achsen von Kamera und Blitzlicht, liegt das Helligkeitszentrum des Blitzlichtes bei diesen herkömmlichen Verkehrsüberwachungsgeräten in der Mitte des Fotos, so dass zum Beispiel der Fahrzeuginnenraum je nach Position des Fahrzeuges nur unzureichend ausgeleuchtet und der Fahrzeugführer auf der Abbildung nicht oder lediglich undeutlich erkennbar ist.

Diese bei herkömmlichen Verkehrsüberwachungsgeräten entstehenden lichttechnischen Extrema (schwach ausgeleuchteter Fahrzeuginnenraum und überstrahltes Kennzeichen) und deren Veränderung bei nacheinander aufzunehmenden Objekten (Änderung der Fahrspur etc.) stellen sehr hohe Anforderungen an die Dynamik des Aufnahmemediums, so dass sowohl die Nassfilmtechnik als auch die Digitalbildtechnik als Aufnahmetechnologie zu einem verhältnismäßig hohen Anteil an nicht verwertbaren Aufnahmen, insbesondere bei der Verkehrsüberwachung von mehreren Fahrspuren führen.

In der Patentschrift DE 60 2004 002071 T2 wird ein Verfahren und eine Vorrichtung vorgeschlagen, mit denen ein Fahrzeug, das sich auf einer bestimmten Fahrbahn bewegt, fotografisch erfasst wird.

Dabei werden vorhandene Beleuchtungsmittel und Bildaufnahmemittel so eingestellt, dass eine Bildaufnahme von dem zu erfassenden Fahrzeug dann erfolgt, wenn dieses die vorbestimmte Position, d.h. eine vorbestimmte Entfernung zur Kamera erreicht hat. Das Beleuchtungsmittel ist so ausgelegt, dass es das Objektfeld differenziert ausleuchtet, womit das Kennzeichen und der Fahrzeuginnenraum unterschiedlich ausgeleuchtet werden. Indem sich das zu erfassende Fahrzeug beim Auslösen der Kamera an einem festen Fotopunkt befindet, bedarf es keiner Steuerung der Lichtintensität in Abhängigkeit von der Ortslage, da die Ortslage eines Fahrzeuges beim Auslösen der Kamera immer die gleiche ist.

Indem bei einer Bildaufnahme ein Fahrzeug an einer vorgegebenen Position aufgenommen wird, werden lichttechnische Veränderungen bei nacheinander aufzunehmenden Objekten z. B. weil diese auf unterschiedlichen Fahrspuren fahren oder innerhalb einer Fahrspur zum Zeitpunkt der Aufnahme in unterschiedlichen Entfernungen zur Kamera befinden, vermieden. Die lichttechnischen Extrema bedingt durch eine nur geringe Reflektivität des Fahrzeuginnenraums und eine sehr hohe Reflektivität des Kennzeichens werden ausgewogen durch eine zeitgleiche differenzierte Beleuchtung.

Demgegenüber liegt der Erfindung die Aufgabe zugrunde, ein Verfahren und eine Anordnung zur fotografischen Aufnahme eines zu erfassenden Fahrzeuges zu schaffen, bei denen unabhängig von lichttechnischen Veränderungen bei nacheinander aufzunehmenden Fahrzeugen, z. B. in Folge der Änderung der Fahrspur (s. vorherigen Absatz), die Ausleuchtung des Fahrzeuges zur Erhöhung der Rechtssicherheit des dokumentierten Verkehrsverstoßes verbessert ist.

Unter einer verbesserten Ausleuchtung kann z. B. eine optimale Ausleuchtung des Fahrzeugkennzeichens oder insbesondere die Ausleuchtung des Fahrzeuginnenraumesverstanden werden, so dass eine optimale Fahrzeugführererkennung möglich ist.

Diese Aufgabe wird durch ein Verfahren zur fotografischen Aufnahme eines zu erfassenden Fahrzeuges mit den Merkmalen des Patentanspruches 1 und eine Anordnung zur fotografischen Aufnahme eines zu erfassenden Fahrzeuges mit der Merkmalskombination des Patentanspruches 13 gelöst.

Gemäß dem erfindungsgemäßen Verfahren zur fotografischen Abbildung eines zu erfassenden Fahrzeuges mittels einer Bildaufnahmeeinrichtung, beispielsweise bei einer Geschwindigkeitsüberschreitung, einem Rotlichtverstoß oder einer Abstandsüberwachung, wird eine Beleuchtungseinrichtung zur Ausleuchtung des Fahrzeuges während der Abbildung verwendet. Erfindungsgemäß wird die Ortslage des zu erfassenden Fahrzeuges im Abbildungszeitraum mittels einer Ortserfassungseinrichtung erkannt, wobei das anschließende Ausleuchten des Fahrzeuges zu dessen Abbildung mit einer für die ermittelte Ortslage des Fahrzeuges abhängig gesteuerten Lichtintensität erfolgt. Insbesondere kann der Fahrzeuginnenraum entsprechend der Ortslage des Fahrzeuges bei der Feststellung des Verkehrsverstoßes, wie beispielsweise einer Geschwindigkeitsüberschreitung, definiert ausgeleuchtet werden. Gemäß der erfindungsgemäßen Lösung wurde erkannt, dass ein wesentlicher, die Aufnahmesituation beeinflussender Faktor, neben wechselnden meteorologischen Lichtverhältnissen, die Ortslage der Fahrzeuge auf der Fahrbahn und insbesondere auf verschiedenen Fahrbahnspuren bei mehrspurigen Fahrbahnen ist. Die Lichtintensität in der jeweiligen Ortslage des zu erfassenden Fahrzeuges wird so gesteuert, dass eine optimale Fahrer- oder Kennzeichenerkennbarkeit aus einem Bild, unabhängig von der von dem zu erfassenden Fahrzeug benutzten Fahrspur, eindeutig und manipulationssicher ermöglicht ist. Zur Bildaufnahme wird vorzugsweise eine Einzelbildkamera in Digital- oder Nassbildtechnik verwendet, mittels der, während sich das Fahrzeug in dem Messbereich befindet, eine Momentaufnahme von dem Fahrzeug erzeugt wird.

Die Steuerung der Lichtintensität zur Ausleuchtung des Fahrzeuges, insbesondere bei konstanter Belichtungsdauer der Kamera, wird vorzugsweise über die Steuerung der Strahlungsenergie in Abhängigkeit von der Entfernung des fotografisch zu erfassenden Fahrzeuges gegenüber der Bildaufnahmeeinrichtung durchgeführt, wobei die Lichtintensität trotz zunehmendem Fahrzeugabstand an der Ortslage des Fahrzeuges annähernd gleich bleibt, um eine optimale Ausleuchtung zu gewährleisten. Zusätzlich kann der Winkel zwischen einer sich zu dem fotografisch zu erfassenden Fahrzeug erstreckenden Messachse und dem Fahrbahnrand berücksichtigt werden.

Gemäß einem besonders bevorzugten Ausführungsbeispiel der Erfindung erfolgt die Ortserkennung des zu erfassenden Fahrzeuges mittels zumindest eines die Fahrbahn in einem Winkelbereich scannenden Sensors, vorzugsweise eines Laser- oder Radarsensors.

Die Ortserkennung des zu erfassenden Fahrzeuges kann ferner mittels einer der Fahrbahn zugeordneten Sensoranordnung, beispielsweise einer in den Fahrbahnbelag eingelassenen Piezo- und/oder Schleifenanordnung, durchgeführt werden. Die zur Ermittlung der Fahrzeuggeschwindigkeit, der Fahrzeugabstände, oder der Einfahrt in einen zeitweise geschützten Bereich einer Kreuzung bereits vorhandene Sensoranordnung findet vorzugsweise auch für die Ortsbestimmung Verwendung. Beispielsweise kann mittels dem zur Geschwindigkeitserfassung vorgesehenen Radar- oder Laserscanner neben der Fahrzeuggeschwindigkeit auch die Fahrzeugposition ermittelt werden.

Als besonders vorteilhaft hat es sich erwiesen, wenn die Strahlungsenergie und damit die Lichtintensität zur Ausleuchtung durch eine Begrenzung der Einschaltdauer zumindest einer Lichtquelle der Beleuchtungseinrichtung während der Belichtungszeit der Bildaufnahmeeinrichtung (Kamerabelichtungszeit) gesteuert wird. Über die Einschaltdauer kann die während der Kamerabelichtungszeit wirksame Strahlungsenergie variiert werden, so dass eine ortsabhängig optimierte Ausleuchtung des Fahrzeuges mit ausreichender Lichtintensität, insbesondere des Fahrzeuginnenraumes, erreicht wird. Ferner wird aufgrund der verringerten Wärmeentwicklung die Verlustleistung reduziert und dadurch der Wirkungsgrad verbessert. Weiterhin verlängert sich sowohl die Lebensdauer der Blitzlampe als auch durch den geringeren Stromverbrauch die Betriebsdauer der Anlage bei einem Akkubetrieb.

Die Blitzauslösung der Beleuchtungseinrichtung kann hierbei im Wesentlichen zeitgleich mit der Auslösung der Bildaufnahmeeinrichtung erfolgen, wobei die Lichtquelle vor dem Ende der Kamerabelichtungszeit gelöscht bzw. ausgeschaltet wird.

Alternativ erfolgt die Auslösung der Bildaufnahmeeinrichtung zeitlich versetzt vor oder nach der Blitzauslösung durch die Beleuchtungseinrichtung, so dass ebenfalls eine Steuerung der für die Belichtung relevanten Lichtmenge in Abhängigkeit der Fahrzeugortslage möglich ist. Die zeitlich versetzte Auslösung der Bildaufnahmeeinrichtung vor oder nach der Blitzauslösung, kann mit der beschriebenen Begrenzung der Einschaltdauer vorteilhaft kombiniert werden.

Die Lichtintensitätssteuerung zur Ausleuchtung des zu erfassenden Fahrzeuges kann alternativ oder zusätzlich mittels Ausrichtung der optischen Achse der Beleuchtungseinrichtung in Abhängigkeit der ermittelten Ortslage des fotografisch zu erfassenden Fahrzeuges erfolgen (koordinatengesteuertes Blitzlicht).

Vorteilhaft wird zusätzlich der Strahlwinkel an die mit der Ortslage ermittelten Entfernung angepasst, um einen auf das Fahrzeug begrenzten Bereich (Spot) auszuleuchten. Vorzugsweise werden die optische Achse der Beleuchtungseinrichtung und der Stahlwinkel hierzu auf die ermittelte Ortslage des zu messenden Fahrzeuges mittels zumindest einer der Lichtquelle zugeordneten verstellbaren Optik ausgerichtet und angepasst.

Die Ausrichtung der optischen Achse und Begrenzung des Strahlwinkels der Beleuchtungseinrichtung werden bei einem Ausführungsbeispiel der Erfindung in Abhängigkeit der Entfernung des fotografisch zu erfassenden Fahrzeuges und dessen Winkel zum Fahrbahnrand, beispielsweise mittels einer Reflektoranordnung, derart verändert, dass im Wesentlichen das zu erfassende Fahrzeug ausgeleuchtet wird. Mit anderen Worten - der Ort des Intensitätsmaximas und die ausgeleuchtete Fläche wird mittels Lichtlenkung angepasst, um einen auf das zu erfassende Fahrzeug begrenzten Bereich auszuleuchten (Spot). Dies ist besonders vorteilhaft, da bekannte Lösungen zur Lichtfokussierung mit Linsensystemen, keine Auslenkung der optischen Achse bewirken. Der ausgeleuchtete Bereich kann bei mehrspurigen Fahrbahnen auf die Fahrspur des zu fotografierenden Fahrzeuges begrenzt und für jede Fahrspur individuell einstellbar sein. Sowohl bei dieser Lösung als auch bei der Begrenzung der Einschaltdauer kann besonders vorteilhaft reduziert werden, dass das Blitzlicht andere, unbeteiligte Verkehrsteilnehmer irritiert oder blendet.

Die Ausrichtung der optischen Achse und/oder Begrenzung des Strahlwinkels der Beleuchtungseinrichtung in Abhängigkeit der ermittelten Ortslage des fotografisch zu erfassenden Fahrzeuges erfolgt vorteilhafterweise über zumindest einen verstellbaren Reflektor mit einer Vielzahl schwenkbarer Spiegel, vorzugsweise Mikrospiegel. Über eine Veränderung der Reflektorkrümmung und Verlagerung des Krümmungsmittelpunktes, durch gezielte Ansteuerung der Mikrospiegel, können der Strahlwinkel und die optische Achse der Beleuchtungseinrichtung verändert werden. Damit wird die Strahlungsenergie auf die Ortslage des Fahrzeuges konzentriert gelenkt. Hierbei ist nicht nur die Lenkung der optischen Achse der Beleuchtungseinrichtung durch eine Verkippung des Reflektors mittels der Mikrospiegelanordnung sondern durch Fokussierung mittels einer Verformung des Reflektors durch die Mikrospiegelanordnung eine gezielte Ausleuchtung des Fahrzeuges möglich.

Die vorzugsweise einzeln, unabhängig voneinander ansteuerbaren Mikrospiegel können als Array einer integrierten Schaltung zugeordnet sein, so dass ein äußerst kompakter Aufbau erreicht wird.

Die Auslenkung der Spiegelelemente erfolgt vorzugsweise in zwei Richtungen, beispielsweise elektrostatisch, thermoelektrisch oder piezoelektrisch. Erfindungsgemäß wird es bevorzugt, wenn die Mikrospiegel mittels Piezoelementen ansteuerbar und mit hoher Stellgeschwindigkeit derart schwenkbar sind, dass eine variable Spiegelstellung erreicht wird, die eine Ausrichtung des Winkels und/oder Begrenzung des Strahlwinkels der Lichtquelle in Abhängigkeit der ermittelten Ortslage des fotografisch zu erfassenden Fahrzeuges ermöglicht. Hierbei kann, bei der Erfassung von sich auf verschiedenen Fahrspuren mit unterschiedlichen Entfernungen zu der Kamera bewegenden Fahrzeugen, ein annähernd gleicher Spotdurchmesser am Messpunkt erzielt werden.

Die Lichtintensität zur Ausleuchtung ist bei einer erfindungsgemäßen Lösung neben der Ortslage des Fahrzeuges in Abhängigkeit der Umgebungshelligkeit, der Belichtungszeit der Bildaufnahmeeinrichtung, d.h. der Zeitspanne, in der ein photosensibles Element bspw. ein Nassfilm einer herkömmlichen Kamera oder ein CMOS- oder CCD-Sensor einer Digitalkamera zur Aufzeichnung eines Bildes dem Licht ausgesetzt wird und/oder des Anwendungsfalles, beispielsweise Front- oder Heckfoto, Fahrer- und/oder Kennzeichenerkennung steuerbar.

Der erfindungsgemäßen Anordnung zur fotografischen Abbildung eines zu erfassenden Fahrzeuges sind entsprechend eine Bildaufnahmeeinrichtung zur Aufnahme und eine Beleuchtungseinrichtung zur Ausleuchtung des Fahrzeuges während der Abbildung zugeordnet. Erfindungsgemäß ist eine Ortserfassungseinrichtung zur Erfassung der Ortslage des zu fotografierenden Fahrzeuges vorgesehen, wobei die Lichtintensität zur Ausleuchtung des Fahrzeuges in Abhängigkeit der Ortslage mittels der Beleuchtungseinrichtung steuerbar ist. Hierzu wird die zur hinreichenden Ausleuchtung des Fahrzeuges erforderliche Lichtintensität vorzugsweise mittels einer Prozessoreinheit aus der erfassten Fahrzeugortslage ermittelt.

Gemäß einer besonders bevorzugten Ausführungsform einer erfindungsgemäßen Abbildungsanordnung verwendet die Ortserfassungseinrichtung zumindest einen die Fahrbahn in einem Winkelbereich scannenden Sensor (Tracking-Sensor), beispielsweise einen Laser- oder Radarsensor, zur Ortserkennung des zu erfassenden Fahrzeuges.

Die Ortserfassungseinrichtung kann alternativ oder zusätzlich eine der Fahrbahn zugeordnete Sensoranordnung, beispielsweise eine in den Fahrbahnbelag eingelassene Piezo-und/oder Schleifenanordnung, zur Ortserkennung des zu erfassenden Fahrzeuges aufweisen.

Als fertigungstechnisch besonders vorteilhaft hat es sich erwiesen, wenn die zur Ermittlung der Fahrzeuggeschwindigkeit, der Fahrzeugabstände, oder der Einfahrt in einen zeitweise geschützten Bereich einer Kreuzung bereits vorhandene Sensoranordnung ebenfalls für die Ortsbestimmung Verwendung findet.

Der Beleuchtungseinrichtung ist bei einem bevorzugten Ausführungsbeispiel der Erfindung eine Schalteinrichtung zur Begrenzung der Einschaltdauer der Lichtquelle und zur Leistungsregulierung der Lichtquelle während der Belichtungszeit der Bildaufnahmeeinrichtung zugeordnet. Das Prinzip der Steuerung der Strahlungsenergie basiert hierbei auf einer in Abhängigkeit der Fahrzeugortslage steuerbaren Spannungsquelle zur Versorgung der Lichtquelle. Die Regelung der Blitzleistung kann neben der Entfernung jeweils in Abhängigkeit des Anwendungsfalles erfolgen. Zündverzugszeiten können hierbei berücksichtigt und kompensiert werden. Eine Unterdrückung von Fehlzündungen und Nachleuchten wird durch die Brenndauerbegrenzung möglich. Beispielsweise wird bei der Erstellung eines Frontdoppelfotos zur Feststellung eines qualifizierten Rotlichtverstoßes bei Einfahrt in den Kreuzungsbereich ein aufgrund der relativ großen Entfernung zwischen dem Fahrzeug und der Verkehrsüberwachungsanlage erster Blitz mit voller Leistung und anschließend bei, nach dem Einfahren in den Kreuzungsbereich, verringerter Entfernung ein zweiter Blitz mit verringerter, bspw. etwa mit halber Leistung erzeugt.

Die Begrenzung der Einschaltdauer zur Steuerung der Strahlungsenergie ermöglicht eine Verbesserung des elektrischen Wirkungsgrades, so dass ein verringerter Energiebedarf bei gleicher Blitzleistung erreicht wird, da lediglich die effektiv in Abhängigkeit der für die Ausleuchtung des zu erfassenden Fahrzeuges erforderliche Energie nachgeladen wird. Dadurch ist die Verkehrsmessanordnung sofort oder bereits nach kurzer Zeit bereit für eine neue Messung, so dass Nachfolgefahrzeuge zuverlässig erkannt werden. Aufgrund der entsprechend geringeren Wärmeentwicklung verringert sich ferner die Wahrscheinlichkeit einer ungewünschten Blitzabschaltung wegen Überhitzung, so dass dynamische, energiereiche Blitzfolgen (Serienblitze) mit hoher Blitzfolge und Intensität möglich sind.

Als Lichtquelle bzw. Leuchtmittel kann ein Array oder eine einzelne Glühlampe, Laserdiode, Leuchtdiode und/oder besonders bevorzugt eine Hochdruckentladungslampe (Blitzröhre) vorgesehen sein. Bei Verwendung von Entladungslampen als Leuchtmittel kann die Brenndauer mittels der Schalt- oder Unterbrechereinrichtung minimiert werden, sonst würde der Lichtbogen je nach Größe des Energiespeichers und der Röhrenimpedanz länger als die Belichtungszeit brennen (Auslöschung des Lichtbogens zur Brenndauerbegrenzung). Aufgrund der Verkürzung der Brenndauer des Lichtbogens durch Lichtbogenlöschung wird ferner eine höhere Standzeit erreicht.

Die Registrierung eines Bauteil- oder Lampendefekts (z.B. Entladungslampe zündet nicht nach erfolgtem Triggersignal) beispielsweise mittels einer Lichtstrommessung und die Ausgabe einer Fehlermeldung (Röhrendefekt, Überhitzung, fehlerhafte Komponente etc.) ist vorzugsweise vorgesehen. Ferner können Statusmeldungen, wie Ladevorgang, Nachladung, Auslösung, Betriebsbereitschaft für den Bediener erzeugt werden, die den Bedienkomfort des Gerätes erhöhen. Ein Remote-Betrieb beispielsweise für externes Ein- bzw. Ausschalten ist realisierbar.

Die Lichtquelle kann einer oder mehreren Fahrspuren zur Ausleuchtung eines zu erfassenden Fahrzeuges zugeordnet sein. Beispielsweise kann eine Blitzröhre A für die Ausleuchtung der Fahrspuren 1 und 2 und eine Blitzröhre B für die Fahrspuren 3 und 4 einer vierspurigen Straße vorgesehen sein. Den Lichtquellen ist vorzugsweise jeweils eine entsprechende Optik zur Einstellung des Strahlwinkels zugeordnet.

Vorzugsweise verwendet die Schalteinrichtung insbesondere aufgrund der kurzen Einschaltzeiten, bedingt durch die kurzen Kamerabelichtungszeiten, ein als Schaltelement ausgebildetes Halbleiterelement, insbesondere einen Transistor und/oder Thyristor, zur Unterbrechung der Versorgungsspannung der Lichtquelle. Beispielsweise kann der Lichtbogen- bzw. Entladungsstrom einer Hochdruckentladungslampe durch einen Bipolar-Transistor mit isolierter Gate-Elektrode (IGBT-Modul) als Schaltelement in Abhängigkeit der zur Ausleuchtung erforderlichen Lichtintensität unterbrochen werden. Ferner sind IGCT-Thyristoren (Integrated Gate Commutated Thyristor) und/oder GTO-Thyristoren (Gate Turn-Off Thyristor) vorteilhaft einsetzbar. Bei einer Beleuchtungseinrichtung mit einer Glühlampe als Leuchtmittel können alternativ Feldeffekt-Transistoren (FET), wie beispielsweise Metall-Oxid-Halbleiter-Feldeffekttransistoren (MOS-FET), zur Leistungssteuerung ausreichend sein.

Das zur Unterbrechung des Lichtbogen- bzw. Entladungsstromes bei Hochdruckentladungslampen oder der Versorgungsspannung bei Glühlampen vorgesehene Schaltelement ist vorzugsweise seriell zu dem Leuchtmittel in der elektrischen Schaltung angeordnet.

Die Beleuchtungseinrichtung weist bei einem konkreten Ausführungsbeispiel der Vorrichtung eine Spannungsquelle auf, zu der parallel mindestens ein Ladungsspeicher, beispielsweise ein Kondensator (Fotoblitzkondensator), zur kurzfristigen Aufrechterhaltung der selbständigen Gasentladung angeordnet ist. Die Kapazität des zumindest einen Kondensators ist insbesondere in Verbindung mit der Röhrenimpedanz und der Schalteinrichtung derart bemessen, dass zumindest innerhalb der Belichtungszeit der Aufnahme ein annähernd gleichbleibender Stromfluss ermöglicht werden kann. Die Spannungsquelle ist vorzugsweise über ein Wandlerelement, insbesondere einen Spannungs- oder Stromwandler mit dem Ladungsspeicher verbunden. Die Ansteuerung der Schalteinrichtung erfolgt vorzugsweise in Abhängigkeit eines Auslösesignals oder - impulses, dem sogenannten Triggersignal, über eine Signalkonvertierungseinrichtung. Die Blitzkondensatoren werden aus Sicherheitsgründen beim Ausschalten der Verkehrsmessvorrichtung, beim Öffnen des Gehäuses oder beim Entfernen von Gehäuseteilen beispielsweise Filterscheiben etc., sowie bei einer Fehlererkennung entladen, um eine Gefährdung des Benutzers durch die anliegende Hochspannung zu vermeiden.

Zur Hochspannungserzeugung und Spannungs- bzw. Stromunterbrechung kann der Beleuchtungseinrichtung ein Schaltnetzteil zugeordnet sein. Das Schaltnetzteil weist einen passiven und/oder speziellen aktiven Filter auf, um den Anteil an störenden Oberschwingungen zu minimieren und damit den Anforderungen des EMI-Standards zu entsprechen.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
- Figur 1: eine Prinzipskizze einer Geschwindigkeitsmessanordnung zur fotografischen Abbildung eines zu erfassenden Fahrzeuges gemäß eines ersten erfindungsgemäßen Ausführungsbeispiels;
- Figur 2: eine Prinzipskizze eines erfindungsgemäßen Ausführungsbeispiels einer koordinaten- und intensitätsgesteuerten Geschwindigkeitsmessanordnung;
- Figur 3: ein Spannungs-Zeit-Diagramm einer Lichtintensitätssteuerung mittels einer Begrenzung der Einschaltdauer der Lichtquelle;
- Figur 4: ein Spannungs-Zeit-Diagramm gemäß dem die Blitzauslösung zeitlich versetzt nach Auslösung der Bildaufnahmeeinrichtung erfolgt;
- Figur 5: ein Spannungs-Zeit-Diagramm gemäß dem die Kameraauslösung zeitlich versetzt nach Blitzauslösung erfolgt;
- Figur 6: eine schematische Schaltungsanordnung mit einer Entladungslampe;
- Figur 7: eine schematische Schaltungsanordnung mit einer Glühlampe und
- Figur 8: den Spannungs/Strom-Zeit-Verlauf der Schaltungsanordnung aus Figur 6 anhand eines Messprotokolls.

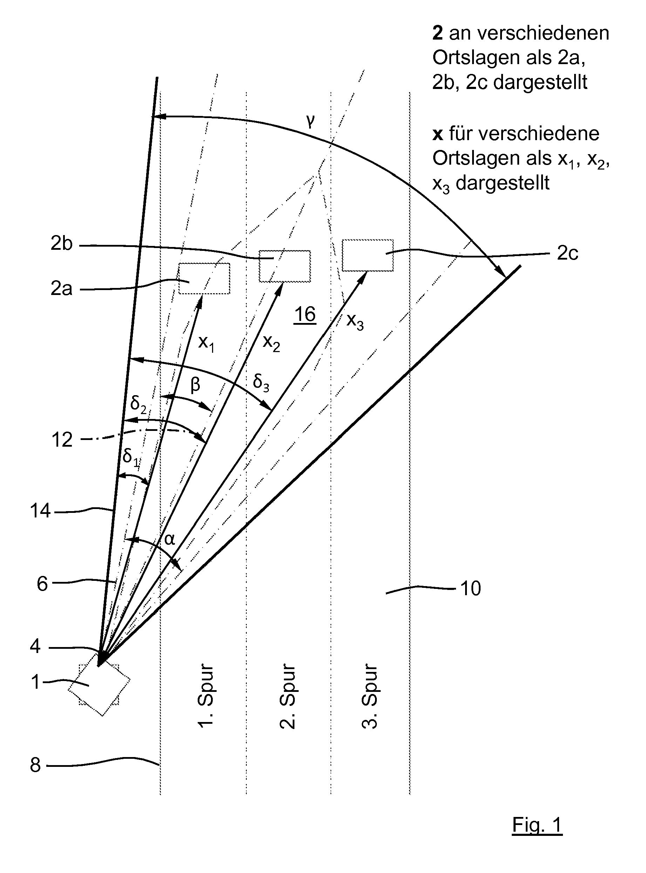

Figur 1 zeigt eine Prinzipskizze eines erfindungsgemäßen Ausführungsbeispiels einer stationären Geschwindigkeitsmessanordnung 1. Beispielhaft ist ein zu erfassendes Fahrzeug 2 an drei verschiedenen Ortslagen an denen es sich während der fotografischen Abbildung befinden kann, schematisch als Fahrzeug 2a, 2b und 2c dargestellt. Für die betreffenden Ortslagen ist die Entfernung x zur Geschwindigkeitsmessanordnung 1 als Entfernung x1, x2, x3 und der Winkel δ als δ₁, δ₂, δ₃ dargestellt.

Die Messanordnung 1 weist eine Bildaufnahmeeinrichtung 4 zur Aufnahme des Fahrzeuges 2a, 2b, 2c und eine anhand des Strahlenganges gezeigte Beleuchtungseinrichtung 6 mit einer Lichtquelle, beispielsweise einer Hochdruckentladungslampe, zur Ausleuchtung des Fahrzeuges 2a, 2b, 2c während der Abbildung auf. Die Messanordnung 1 ist am rechten Fahrbahnrand 8 einer Fahrbahn 10 mit drei Fahrspuren derart angeordnet, dass ankommende Fahrzeuge 2a, 2b, 2c von vorne erfasst werden. Als Bildaufnahmeeinrichtung 4 wird eine Einzelbildkamera in Digital- oder Nassbildtechnik mit einem Fotowinkel verwendet. Der Winkel einer optischen Achse 12 der Kamera bezogen auf den Fahrbahnrand 8 ist dabei derart gewählt, dass die Kamera den Vorschriften entsprechend ausgerichtet ist. Die stationäre Messanordnung 1 ist gemäß Figur 1 auf einem Mast am Fahrbahnrand 8 oder an einer Brücke montierbar. Bei einer nicht dargestellten mobilen Variante ist die Messanordnung 1 beispielsweise mit einem Stativ, als Einbausatz für ein Fahrzeug, oder im Aufstell-Container ausgeführt. Die Auslösung der Kamera erfolgt voll automatisch bei gleichzeitiger Überwachung von mehreren Fahrspuren.

Zur Erfassung der jeweiligen Ortslage eines zu messenden Fahrzeuges 2a, 2b, 2c ist eine anhand ihres Erfassungsbereiches gezeigte Ortserfassungseinrichtung 14 vorgesehen. Abhängig von der ermittelten Ortslage des zu erfassenden Fahrzeuges wird die Lichtintensität zur optimalen Ausleuchtung des Fahrzeuges, insbesondere des Fahrzeuginnenraumes, in einem Blitzbereich 16 mittelbar durch eine Steuerung der Strahlungsenergie mittels der Beleuchtungseinrichtung 6 gesteuert. Die Strahlungsenergie wird für jede Fahrspur in Abhängigkeit der Fahrzeugentfernung individuell eingestellt. Beispielsweise wird die Strahlungsenergie zur Erfassung des auf der am weitesten von dem Blitzlicht entfernten 3. Spur der Fahrbahn 10 fahrenden Fahrzeuges 2c erhöht, wodurch die Lichtintensität am Ort des Fahrzeuges trotz zunehmendem Fahrzeugabstand annähernd gleich bleibt. Bei dem dargestellten Ausführungsbeispiel der Erfindung erfolgt die Ausleuchtung des fotografisch zu erfassenden Fahrzeuges 2a, 2b, 2c mit einer von der Entfernung x₁, x₂, x₃ des Fahrzeuges 2a, 2b, 2c zu der Messanordnung 1 abhängigen Strahlungsenergie. Der Fahrzeuginnenraum wird entsprechend der Ortslage des Fahrzeuges 2a, 2b, 2c bei der Feststellung der Geschwindigkeitsüberschreitung ausgeleuchtet, so dass eine optimale Fahrzeugführererkennung auf dem Foto möglich ist.

Die Ortserkennung des zu erfassenden Fahrzeuges erfolgt bei dem dargestellten Ausführungsbeispiel mit einem intelligenten Geschwindigkeitssensor, beispielsweise einem Laser- oder Radarsensor, der die Fahrbahn in einem in der Figur mit durchgezogener Linie dargestellten Winkelbereich unter einem Winkel scannt und neben der Fahrzeuggeschwindigkeit die Information der jeweiligen Fahrzeugentfernung x₁, x₂, x₃ und deren Winkel δ₁, δ₂, δ₃ zum Fahrbahnrand 8 zur Bestimmung der Fahrzeugortslage ermittelt. Die optische Achse des Scanners erstreckt sich hierzu entlang der optischen Achse 12 der Kamera, wobei der Scanner einen gegenüber dem Winkelbereich der Kamera vergrößerten Winkelbereich abdeckt. Bei einem Radarsensor wird mit der Erfassung des Fahrzeuges 2a, 2b, 2c ein Teil der unmodulierten kontinuierlichen Radarstrahlung frequenzverschoben in eine Radarantenne zurückreflektiert. Über den Vergleich der Frequenzen der ausgesandten und der reflektierten, empfangenen Strahlung mittels einer Signalverarbeitungsanlage wird in bekannter Weise die Dopplerfrequenz ermittelt und die Fahrzeuggeschwindigkeit bestimmt. Um mittels eines Radarsensors simultan zur Geschwindigkeitsmessung eine Entfernungsmessung durchzuführen, sendet der Radarscanner in einer definierten Impulsfolge Einzelimpulse aus, wobei aus der Laufzeit der Einzelimpulse bei bekannter Ausbreitungsgeschwindigkeit die Entfernung des Fahrzeuges 2a, 2b, 2c bestimmbar ist. Alternativ kann eine frequenzmodulierte kontinuierliche Radarstrahlung verwendet werden, wobei die Entfernung des zu erfassenden Fahrzeuges 2a, 2b, 2c aus der Phasendifferenz der reflektierten Strahlungsanteile ermittelt wird.

Demgegenüber erfolgt die Geschwindigkeitsmessung und Entfernungsbestimmung mittels eines Laserscanners durch einen optischen Scanvorgang, wobei ein Laserstrahl von einem im Messbereich vorhandenen Fahrzeug 2a, 2b, 2c reflektiert und zum Messgerät 1 zurück gelenkt wird. Aus der Laufzeit des Laserstrahls zwischen dem Aussenden und dem Detektieren des reflektierten Strahls kann die Fahrzeugentfernung bestimmt werden, wobei die Änderung der Entfernung bezüglich der Zeit zur Bestimmung der Fahrzeuggeschwindigkeit dient.

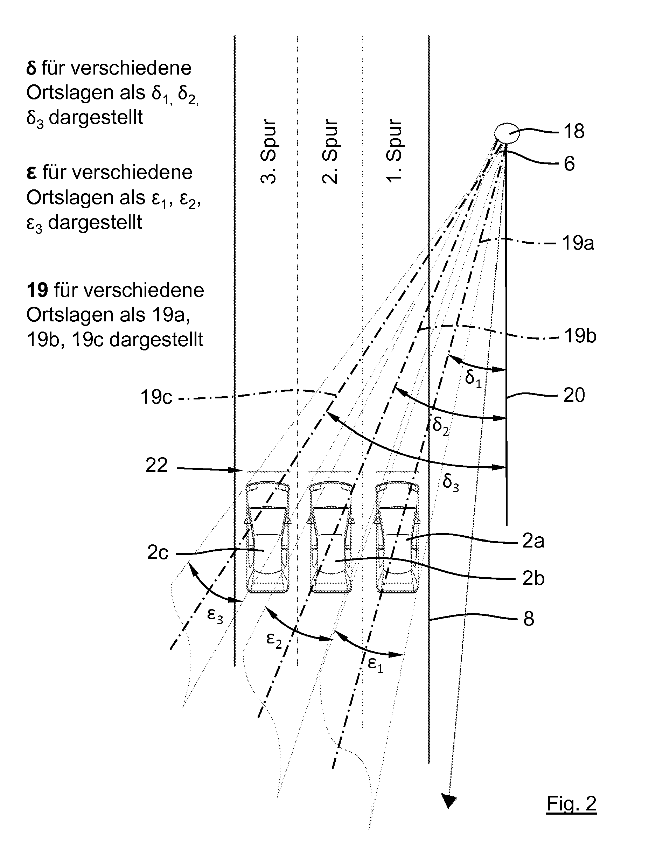

Wie Figur 2 zu entnehmen ist, die eine Prinzipskizze eines erfindungsgemäßen Ausführungsbeispiels einer koordinaten- und intensitätsgesteuerten Geschwindigkeitsmessanordnung 18 zur fotografischen Abbildung eines zu erfassenden Fahrzeuges 2a, 2b, 2c zeigt, kann die Lichtintensität der Ausleuchtung des zu erfassenden Fahrzeuges alternativ oder zusätzlich mittels einer Einstellung des jeweiligen Winkels δ₁, δ₂, δ₃ der optischen Achse 19, die zu den Ortslagen korrelierend als optische Achse 19a, 19b, 19c der Beleuchtungseinrichtung 6 dargestellt ist, in Abhängigkeit der ermittelten Ortslage des fotografisch zu erfassenden Fahrzeuges 2a, 2b, 2c gesteuert werden. Mit anderen Worten - der Ort des Intensitätsmaxima wird mittels Lichtlenkung angepasst, um einen auf das zu erfassende Fahrzeug 2a, 2b, 2c begrenzten Bereich vorzugsweise mit einem individuellen Strahlwinkel ε, der für die einzelnen beispielhaft dargestellten Ortslagen als ε₁, ε_{2,} ε₃ dargestellt ist, auszuleuchten. Der ausgeleuchtete Bereich ist bei mehrspurigen Fahrbahnen im Wesentlichen auf die Fahrspur des jeweils zu fotografierenden Fahrzeuges 2a, 2b, 2c begrenzt und wird für jede Fahrspur in Abhängigkeit der Fahrzeugentfernung individuell eingestellt.

Die Verkehrsmessanordnung besteht hierzu, wie im Folgenden näher erläutert wird, im Wesentlichen aus einer Lichtquelle, beispielsweise einer Hochdruckentladungslampe, die in einem Reflektor angeordnet ist, der eine Spiegelanordnung mit einer Vielzahl von gelenkig gelagerten, steuerbaren Spiegeln aufweist, einer Spannungsquelle zur Stromversorgung der Lichtquelle und einem intelligenten Geschwindigkeitssensor der neben der Geschwindigkeit, die Information der Fahrzeugentfernung und des Winkels δ₁, δ₂, δ₃ bezogen auf eine parallel zum Fahrbahnrand 8 verlaufende Referenzachse 20 liefert. Bei dem dargestellten Ausführungsbeispiel der Erfindung erfolgt die Ortserkennung des jeweils zu erfassenden Fahrzeuges 2a, 2b, 2c mittels einer der Fahrbahn zugeordneten Sensoranordnung 22, beispielsweise einer in den Fahrbahnbelag eingelassenen Piezoanordnung. Die sabotagesicher in der Straße eingebauten Sensoren bieten die Gewähr für eine sichere Detektion sämtlicher zu schnell fahrender Fahrzeuge. Beim Überfahren des Messfeldes erfolgen Einzelmessungen, die anschließend zur Festlegung eines gültigen Messwertes führen. Ferner kann ein intelligenter Piezo-Vorverstärker (IPV) eingesetzt werden, der eine Klassifikation der Fahrzeuge und dadurch unterschiedliche Grenzwerteinstellungen für PKWs und LKWs ermöglicht. Alternativ können die Sensoren derart angeordnet werden, dass eine Durchschnittsgeschwindigkeit über einen definierten Streckenabschnitt ermittelbar ist.

Zur Erfassung der Daten und der anschließenden Steuerung der Baugruppen wird eine Prozessoreinheit verwendet. Wenn ein Fahrzeug 2a, 2b, 2c mit überhöhter Geschwindigkeit durch die Sensoranordnung 22 festgestellt wird, liefert dieser die Entfernung und den dazugehörigen Winkel δ₁, δ₂, δ₃. Die Prozessoreinheit berechnet aus den ermittelten Werten die erforderliche Strahlungsenergie des Blitzlichtes und steuert die Spiegelanordnung des Reflektors lageabhängig (koordinatenabhängig) um den Lichtspot des Blitzlichtes auf die Ortslage des gemessenen Fahrzeuges 2a, 2b, 2c auszurichten. Vorteilhaft ist eine Formgebung des Reflektorspiegels in Abhängigkeit von der Entfernung des fotografisch zu erfassenden Fahrzeuges, um einen annähernd gleichen Spotdurchmesser zu erzielen. Der Reflektor ist hierzu mit einer Vielzahl schwenkbarer Mikrospiegel versehen, wobei der Strahlwinkel bzw. die Strahlaufweitung mittels der Spiegelanordnung derart begrenzt und ausgerichtet wird, dass die in Abhängigkeit der erfassten Ortslage des Fahrzeuges zur Bilderstellung erforderliche Lichtintensität erreicht wird. Hierbei ist nicht nur die Lenkung der Strahlachse durch eine Verkippung des Reflektors mittels der Mikrospiegelanordnung sondern durch Fokussierung mittels einer Verformung des Reflektors durch die Mikrospiegelanordnung eine gezielte Ausleuchtung des Fahrzeuges möglich. Als besonders vorteilhaft hat es sich erwiesen, wenn die Mikrospiegel mittels Piezoelementen derart verschwenkt werden, dass eine variable Spiegelstellung erreicht wird. Bei dieser Lösung kann insbesondere reduziert werden, dass das Blitzlicht andere, unbeteiligte Verkehrsteilnehmer irritiert oder blendet.

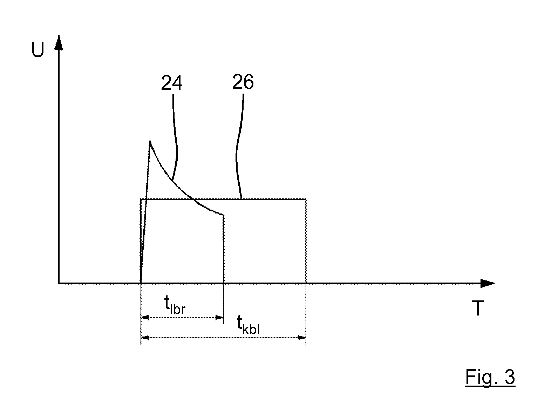

Wie Figur 3 zu entnehmen ist, die ein Spannungs-Zeit-Diagramm einer Lichtintensitätssteuerung der Geschwindigkeitsmessvorrichtung aus den Figuren 1 und 2 zeigt, kann die Lichtintensitätssteuerung der Ausleuchtung durch eine Begrenzung der Einschaltdauer t_{lbr} der Lichtquelle (Kurve 24) während der Belichtungszeit t_{kbl} der Kamera (Kurve 26) erfolgen (Brenndauerbegrenzung). Über die Einschaltdauer t_{lbr} wird die während der Kamerabelichtungszeit wirksame Strahlungsenergie variiert, so dass eine ortsabhängig optimierte Ausleuchtung des jeweiligen Fahrzeuges 2a, 2b, 2c, insbesondere des Fahrzeuginnenraumes, erreicht wird. Ferner wird aufgrund der verringerten Wärmeentwicklung die Verlustleistung reduziert und dadurch der Wirkungsgrad verbessert. Die Blitzauslösung der Beleuchtungseinrichtung kann hierbei im Wesentlichen zeitgleich mit der Auslösung der Bildaufnahmeeinrichtung erfolgen, wobei die Lichtquelle vor dem Ende der Kamerabelichtungszeit, im dargestellten Beispiel etwa nach der halben Belichtungszeit t_{kbl}, gelöscht wird.

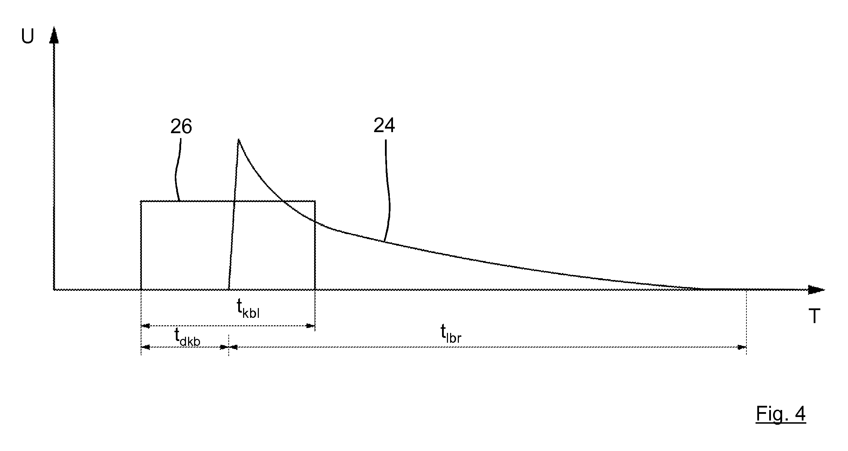

Figur 4 zeigt anhand eines Spannungs-Zeit-Diagramms eine alternative Variante einer Lichtintensitätssteuerung, bei der die Blitzauslösung durch die Beleuchtungseinrichtung zeitlich versetzt nach Auslösung der Bildaufnahmeeinrichtung mit einer Verzögerungszeit t_{dkb} der Blitzauslösung während der Belichtungszeit t_{kbl} der Bildaufnahmeeinrichtung erfolgt. Die wirksame Einschaltdauer t_{lbr} der Lichtquelle ist derart begrenzt, dass eine definierte Intensitätssteuerung der Ausleuchtung in Abhängigkeit der Fahrzeugortslage erreicht wird.

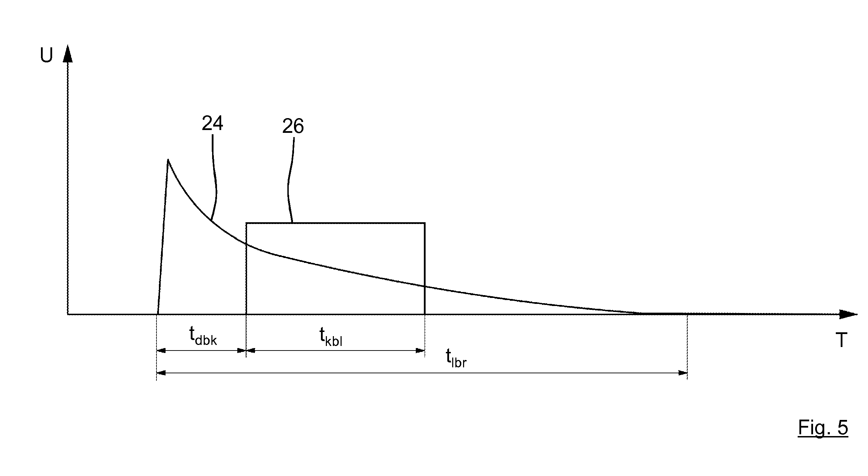

Wie Figur 5 zu entnehmen ist, die ein Spannungs-Zeit-Diagramm gemäß einem weiteren Ausführungsbeispiel einer Lichtintensitätssteuerung zeigt, kann die Auslösung der Kamera (Kurve 26) um eine Verzögerungszeit t_{dbk} zeitlich versetzt nach der mittels einer Kurve 24 angedeuteten Blitzauslösung erfolgen, so dass die gewünschte Lichtintensität in Abhängigkeit der Zeitverläufe erreicht wird. Bei dieser Variante erfolgt die Blitzauslösung vor der Kameraauslösung, wobei der Lichteintrag von der Verzögerungszeit t_{dbk} abhängt.

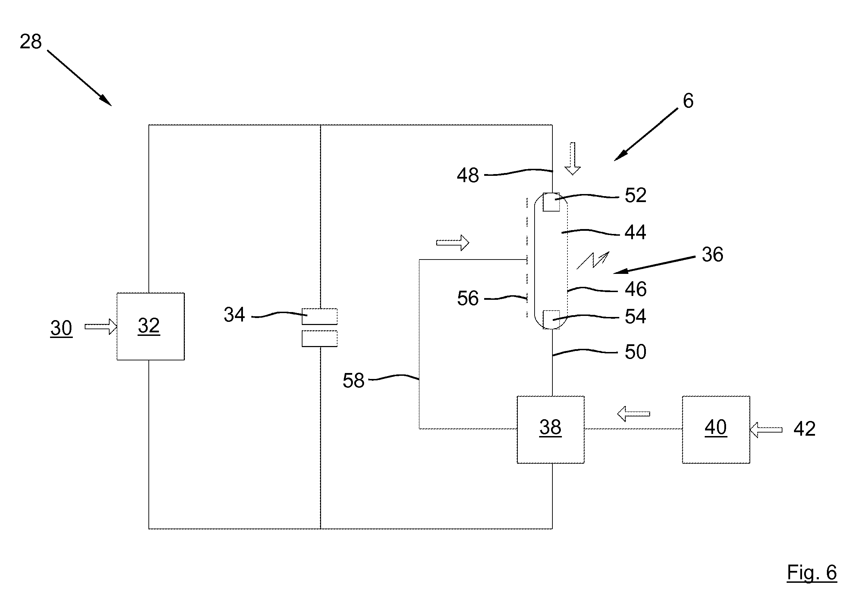

Ein konkretes Ausführungsbeispiel einer Lichtintensitätssteuerung wird im Folgenden anhand Figur 6 näher erläutert.

Gemäß Figur 6, die eine schematische Schaltungsanordnung 28 einer Intensitätssteuerung nach einem erfindungsgemäßen Ausführungsbeispiel zeigt, ist der Beleuchtungseinrichtung 6 ein mit einer Spannungsquelle 30 verbundener Spannungswandler 32 zugeordnet, zu dem parallel ein als Kondensator 34 (Fotoblitzkondensator) ausgebildeter Ladungsspeicher zur Speicherung der Zündenergie angeordnet ist. Die Kapazität des Kondensators ist in Verbindung mit der Röhrenimpedanz und der Schalteinrichtung derart bemessen, dass diese zumindest innerhalb der Belichtungszeit der Aufnahme ein annähernd gleichbleibender Stromfluss ermöglicht werden kann. Die Ansteuerung zum kontrollierten Schalten und Variieren der Strom/Spannungsversorgung der Lichtquelle 36 erfolgt mittels einer seriell zu dieser angeordneten Schalteinrichtung 38 (Entladungsregelung) in Abhängigkeit eines Auslösesignals oder -impulses (Trigger- oder Sync-Signal) einer Signalkonvertierungseinrichtung 40 zur Umsetzung elektrischer Eingangssignale 42. Vorzugsweise verwendet die Schalteinrichtung 38 einen Bipolar-Transistor mit isolierter Gate-Elektrode (IGBT-Modul) als Leistungsschaltelement. Als Spannungswandler 32 kann ein Schaltnetzteil dienen, an dem eine Versorgungsspannung im Bereich von etwa 85 V/AC bis 265 V/AC angelegt werden kann. Der zumindest eine Blitzkondensator 34 wird aus Sicherheitsgründen beim Ausschalten der Verkehrsmessvorrichtung, beim Öffnen des Gehäuses oder beim Entfernen von Gehäuseteilen beispielsweise Filterscheiben sowie bei einer Fehlererkennung entladen, um eine Gefährdung des Benutzers durch die anliegende Hochspannung zu vermeiden.

Als Lichtquelle bzw. Leuchtmittel findet bei dem dargestellten Ausführungsbeispiel der Erfindung eine zweiseitig gesockelte Hochdruckentladungslampe 44 Verwendung. Diese hat ein Entladungsgefäß 46 aus Quarzglas mit einem Innenraum und zwei diametral angeordneten, abgedichteten Sockelhälsen, die jeweils eine Stromzuführung 48, 50 aufweisen. In den Innenraum ragen zwei diametral angeordnete Elektroden 52, 54, die jeweils mit einer der Stromzuführungen 48, 50 verbunden sind und zwischen denen sich während des Lampenbetriebs eine Gasentladung ausbildet. Hierzu ist in dem Innenraum des Entladungsgefäßes eine ionisierbare Füllung eingeschlossen. Zur Verbesserung der Zündeigenschaften ist die Hochdruckentladungslampe 44 mit einem als Zündhilfsdraht 56 ausgeführten Zündhilfselement versehen, das mit einer Zündleitung 58 elektrisch verbunden ist und sich abschnittsweise entlang des Entladungsgefäßes 46 erstreckt. Die zur Zündung notwendige Mindest-Feldstärke der Entladungslampe 44 wird mit Hilfe des Zündhilfsdrahtes 56 realisiert. Nach erfolgter Zündung fließt im Bereich der unselbstständigen Entladung ein kleiner Strom. Die zur Aufrechterhaltung der Glimmentladung notwendige Betriebsspannung, welche niedriger als die Zündspannung ist, wird von dem Kondensator 34 geliefert. Eine Steigerung des Stroms führt anschließend zur Lichtbogenentladung.

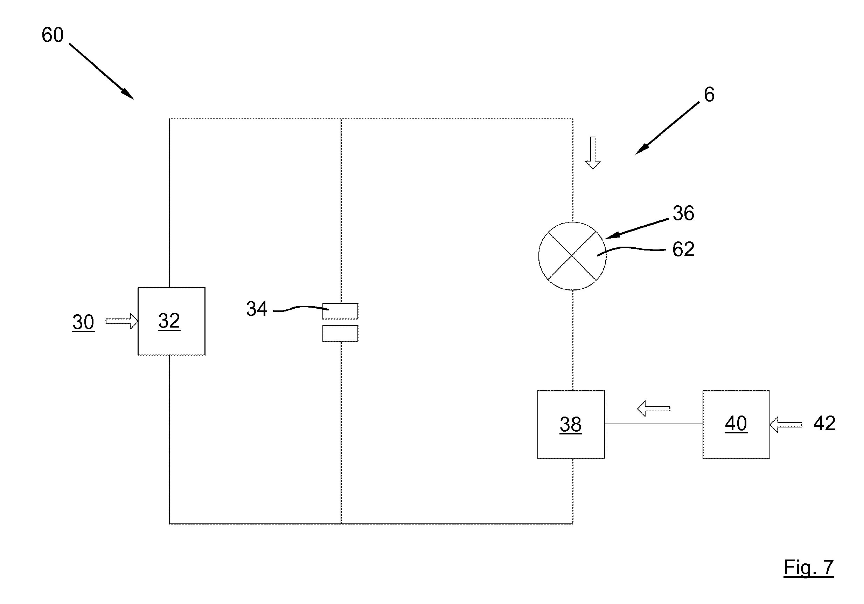

In Figur 7 ist eine schematische Schaltungsanordnung 60 einer Intensitätssteuerung nach einem erfindungsgemäßen Ausführungsbeispiel gezeigt, das sich von dem in Figur 6 beschriebenen Ausführungsbeispiel im Wesentlichen dadurch unterscheidet, dass als Lichtquelle bzw. Leuchtmittel eine Glühlampe 62 verwendet wird, die mit einem Entladungsstrom des Kondensators 34 zur Blitzerzeugung beaufschlagt wird. Die Stromregelung erfolgt bei dieser Variante über einen der Schalteinrichtung 38 zugeordneten Feldeffekt-Transistor (FET), vorzugsweise einen Metall-Oxid-Halbleiter-Feldeffekttransistor (MOS-FET), der von der Signalkonvertierungseinrichtung 40 durch einen Steuerimpuls 42 angesteuert wird. Bei einem nicht dargestellten Ausführungsbeispiel der Erfindung wird als Lichtquelle eine Leucht- oder Laserdiode verwendet. Hierbei dient vorzugsweise eine Anordnung (Array) aus einer Vielzahl von Leucht- oder Laserdioden als Lichtquelle.

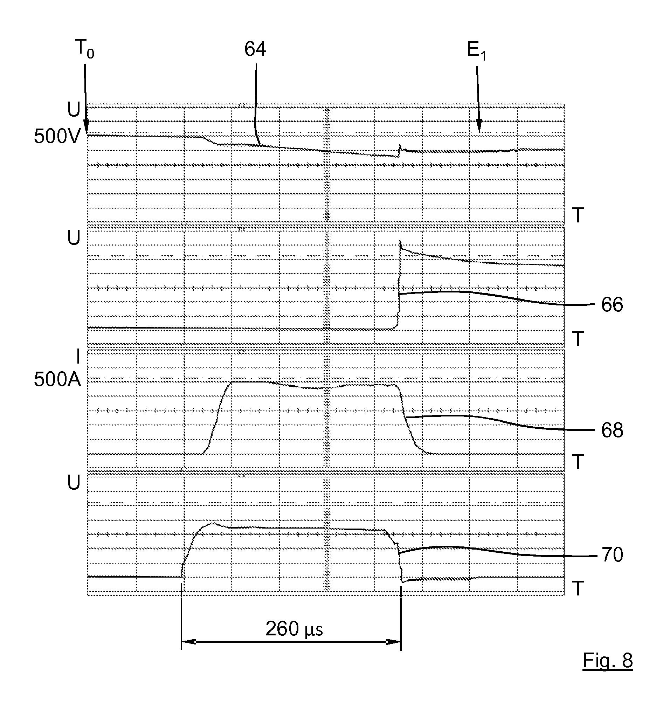

Figur 8 zeigt anhand eines Messprotokolls der Schaltungsanordnung 28 aus Figur 6, den Spannungs/Strom-Zeit-Verlauf der Intensitätssteuerung, wobei der Spannungsverlauf U des Kondensators 34 in Abhängigkeit der Zeit T durch eine Kurve 64 dargestellt ist, welcher von einem relativen Spannungsniveau von 100% ausgeht und während des Blitzes lastbedingt geringfügig absinkt. Die relative elektrische Energie zu einem Zeitpunkt T₀ beträgt ebenfalls etwa 100%, wobei die Änderung der relativen elektrischen Energie ΔE, welche in Strahlungsenergie umgewandelte wurde etwa 17% beträgt, so dass als relative elektrische Energie E, nach dem Blitzvorgang noch ungefähr 83% verfügbar sind. Eine Kurve 66 zeigt den relativen Spannungsverlauf des zur Dämpfung störender Hochfrequenzen und/oder Spannungsspitzen vorgesehenen Entlastungsnetzwerks. Hierbei wird das Spannungsmaxima des Entlastungsnetzwerks beim Ausschaltvorgang am Ende der Blitzzeit erreicht. Der Verlauf des relativen Lichtbogenstroms I während der Blitzauslösung ist anhand einer Kurve 68 dargestellt, gemäß der ein etwa konstanter Entladungsstrom während der Brenndauer ΔT zu erkennen ist. Eine Kurve 70 zeigt entsprechend den Verlauf der zugehörigen Gatespannung (Schwellenspannung), gemäß der sich der IGBT im Sperrbetrieb befindet, bis eine definierte Schwellenspannung (Triggerspannung) erreicht ist.

Offenbart ist ein Verfahren sowie eine Anordnung 1, 18 zur fotografischen Aufnahme eines zu erfassenden Fahrzeuges 2a, 2b, 2c mittels einer Bildaufnahmeeinrichtung 4, insbesondere bei einer Geschwindigkeitsüberschreitung, einem Rotlichtverstoß oder einer Abstandsüberwachung, wobei eine Beleuchtungseinrichtung 6 zur Ausleuchtung des Fahrzeuges 2a, 2b, 2c während der Abbildung vorgesehen ist. Erfindungsgemäß wird die Ortslage des zu erfassenden Fahrzeuges 2a, 2b, 2c durch eine Ortserfassungseinrichtung 14 ermittelt, wobei das Ausleuchten des Fahrzeuges 2a, 2b, 2c zu dessen Abbildung mit einer von der ermittelten Fahrzeugortslage abhängigen Strahlungsenergie erfolgt.

### Bezugszeichenliste

- 1: Geschwindigkeitsmessanordnung
- 2: Fahrzeug
- 4: Bildaufnahmeeinrichtung
- 6: Beleuchtungseinrichtung
- 8: Fahrbahnrand
- 10: Fahrbahn
- 12: optische Achse (Kamera)
- 14: Ortserfassungseinrichtung
- 16: Blitzbereich
- 18: Geschwindigkeitsmessanordnung
- 19: optische Achse (Beleuchtungseinrichtung)
- 20: Referenzachse
- 22: Sensoranordnung
- 24: Kurve (Lichtquelle)
- 26: Kurve (Kamera)
- 28: Schaltungsanordnung
- 30: Spannungsquelle
- 32: Spannungswandler
- 34: Kondensator
- 36: Lichtquelle
- 38: Schalteinrichtung
- 40: Signalkonvertierungseinrichtung
- 42: Eingangssignal
- 44: Hochdruckentladungslampe
- 46: Entladungsgefäß
- 48: Stromzuführung
- 50: Stromzuführung
- 52: Elektrode
- 54: Elektrode
- 56: Zündhilfsdraht
- 58: Zündleitung
- 60: Schaltungsanordnung
- 62: Glühlampe
- 64: Kurve
- 66: Kurve
- 68: Kurve
- 70: Kurve

## Patentansprüche

1. Verfahren zur fotografischen Abbildung eines zu erfassenden Fahrzeuges (2) mittels einer Bildaufnahmeeinrichtung (4), insbesondere bei einer Geschwindigkeitsüberschreitung, einem Rotlichtverstoß und/oder einer Abstandsüberwachung, wobei eine Beleuchtungseinrichtung (6) zur Ausleuchtung des Fahrzeuges (2) während der Abbildung vorgesehen ist, **gekennzeichnet durch** die Schritte:
- Ermitteln der jeweiligen Ortslage des zu erfassenden Fahrzeuges (2) im Abbildungszeitraum mittels einer Ortserfassungseinrichtung (14);
- Steuerung der Strahlungsenergie der von der Beleuchtungseinrichtung kommenden Strahlung in Abhängigkeit von der erfassten Ortslage, um das zu erfassende Fahrzeug (2) mit einer definierten Lichtintensität auszuleuchten.

2. Verfahren nach Anspruch 1, **dadurch gekennzeichnet,**
**dass** die Ortserkennung des zu erfassenden Fahrzeuges (2) mittels zumindest eines die Fahrbahn (10) in einem Winkelbereich scannenden Sensors, vorzugsweise einem Laser- oder Radarsensor, erfolgt.

3. Verfahren nach Anspruch 1 oder 2, **dadurch gekennzeichnet,**
**dass** die Ortserkennung des zu erfassenden Fahrzeuges (2) mittels einer der Fahrbahn zugeordneten Sensoranordnung (22), insbesondere einer in den Fahrbahnbelag integrierten Piezo- und/oder Schleifenanordnung erfolgt.

4. Verfahren nach einem der vorhergehenden Ansprüche, **dadurch gekennzeichnet,**
**dass** die Steuerung der Lichtintensität mit einer von der Entfernung des fotografisch zu erfassenden Fahrzeuges (2) von der Bildaufnahmeeinrichtung (4) abhängig gesteuerten Strahlungsenergie erfolgt.

5. Verfahren nach einem der vorhergehenden Ansprüche, **dadurch gekennzeichnet,**
**dass** die Steuerung der Lichtintensität mit einer von einem Winkel (δ) zwischen einer sich zu dem fotografisch zu erfassenden Fahrzeug erstreckenden Messachse und dem Fahrbahnrand (8) bzw. einer sich parallel zu dem Fahrbahnrand (8) erstreckenden Referenzachse (20) abhängig gesteuerten Strahlungsenergie erfolgt.

6. Verfahren nach einem der vorhergehenden Ansprüche, **dadurch gekennzeichnet,**
**dass** die Strahlungsenergie zur Ausleuchtung durch eine Begrenzung der Einschaltdauer t_{lbr} zumindest einer Lichtquelle (36, 44, 62) der Beleuchtungseinrichtung (6) gesteuert wird.

7. Verfahren nach Anspruch 6, **dadurch gekennzeichnet,**
**dass** die Blitzauslösung der Beleuchtungseinrichtung (6) zeitgleich mit der Auslösung der Bildaufnahmeeinrichtung (4) erfolgt.

8. Verfahren nach Anspruch 6, **dadurch gekennzeichnet,**
**dass** die Auslösung der Bildaufnahmeeinrichtung (4) zeitlich versetzt vor oder nach einer Blitzauslösung erfolgt.

9. Verfahren nach einem der vorhergehenden Ansprüche, **dadurch gekennzeichnet,**
**dass** die Strahlungsenergie gesteuert wird, indem die optische Achse (19) der Beleuchtungseinrichtung (6) in Abhängigkeit der ermittelten Ortslage des fotografisch zu erfassenden Fahrzeuges (2) eingestellt wird.

10. Verfahren nach Anspruch 9, **dadurch gekennzeichnet,**
**dass** der Strahlwinkel (ε) der Beleuchtungseinrichtung (6) in Abhängigkeit der Entfernung des fotografisch zu erfassenden Fahrzeuges (2) derart verändert wird, dass das zu erfassende Fahrzeug definiert ausgeleuchtet wird.

11. Verfahren nach einem der Ansprüche 9 oder 10, **dadurch gekennzeichnet,**
**dass** die optische Achse (19) und/oder der Strahlwinkel (ε)der Beleuchtungseinrichtung (6) mit zumindest einer der Lichtquelle zugeordneten verstellbaren Optik eingestellt wird.

12. Verfahren nach einem der vorhergehenden Ansprüche, **dadurch gekennzeichnet,**
**dass** die Strahlungsenergie zur Ausleuchtung neben der Ortslage des zu erfassenden Fahrzeuges (2) in Abhängigkeit zumindest eines der folgenden Parameter Umgebungshelligkeit, Belichtungszeit und/oder Anwendungsfall gesteuert wird.

13. Anordnung zur fotografischen Abbildung eines zu erfassenden Fahrzeuges (2), mit einer Bildaufnahmeeinrichtung (4) zur Aufnahme eines zu erfassenden Fahrzeuges (2) und einer Beleuchtungseinrichtung (6) zur Ausleuchtung des Fahrzeuges (2) während der Abbildung, sowie einer Ortserfassungseinrichtung (14) zur Ermittlung der jeweiligen Ortslage des zu erfassenden Fahrzeuges (2), **dadurch gekennzeichnet,**
**dass** die Strahlungsenergie der Beleuchtungseinrichtung (6) in Abhängigkeit von der ermittelten Ortslage steuerbar ist, um das zu erfassende Fahrzeug (2) während der Abbildung mit einer definierten Lichtintensität auszuleuchten.

14. Anordnung nach Anspruch 13, **dadurch gekennzeichnet,**
**dass** die Ortserfassungseinrichtung (14) zumindest einen die Fahrbahn (10) in einem Winkelbereich scannenden Sensor, vorzugsweise einen Laser- oder Radarsensor, zur Ortserkennung des zu erfassenden Fahrzeuges (2) aufweist.

15. Anordnung nach Anspruch 13 oder 14, **dadurch gekennzeichnet,**
**dass** die Ortserfassungseinrichtung (14) eine der Fahrbahn (10) zugeordnete Sensoranordnung (22), insbesondere eine in den Fahrbahnbelag integrierte Piezo- und/oder Schleifenanordnung, zur Ortserkennung des zu erfassenden Fahrzeuges (2) aufweist.

16. Anordnung nach einem der Ansprüche 13 bis 15, **dadurch gekennzeichnet,**
**dass** die Beleuchtungseinrichtung (6) eine Schalteinrichtung (38) zur Begrenzung der Einschaltdauer t_{lbr} zumindest einer Lichtquelle (36, 44, 62) während der Belichtungszeit der Bildaufnahmeeinrichtung (4) aufweist.

17. Anordnung nach Anspruch 16, **dadurch gekennzeichnet,**
**dass** die Schalteinrichtung (38) ein als Schaltelement vorgesehenes Halbleiterelement, insbesondere einen Transistor und/oder einen Thyristor, zur Unterbrechung der Versorgungsspannung der Lichtquelle (44) aufweist.

18. Anordnung nach einem der Ansprüche 13 bis 17, **gekennzeichnet durch** zumindest eine Spannungsquelle (30) zu der parallel mindestens ein Ladungsspeicher (34), vorzugsweise ein Kondensator, zur Energieversorgung der Lichtquelle (36, 44, 62) angeordnet ist.

19. Anordnung nach einem der Ansprüche 13 bis 18, **dadurch gekennzeichnet, dass** die Beleuchtungseinrichtung (6) ein Schaltnetzteil zur Spannungserzeugung aufweist.

20. Anordnung nach einem der Ansprüche 13 bis 19, **dadurch gekennzeichnet, dass** die Beleuchtungseinrichtung (6) zumindest eine verstellbare Optik zur Ausrichtung des Winkels (δ) und/oder Begrenzung des Strahlwinkels (ε) der Lichtquelle (36, 44, 62) in Abhängigkeit der ermittelten Ortslage des fotografisch zu erfassenden Fahrzeuges (2) aufweist.

21. Anordnung nach Anspruch 20, **dadurch gekennzeichnet,**
**dass** die Optik zumindest einen verstellbaren Reflektor zur koordinatenabhängigen Steuerung der Strahlungsenergie aufweist.

22. Anordnung nach Anspruch 21, **dadurch gekennzeichnet,**
**dass** der verstellbare Reflektor eine Spiegelanordnung mit einer Vielzahl schwenkbarer Spiegel, vorzugsweise Mikrospiegel aufweist.

23. Anordnung nach Anspruch 22, **gekennzeichnet durch** Piezoelemente zur Ansteuerung der Spiegel.

24. Anordnung nach einem der Ansprüche 13 bis 23, **dadurch gekennzeichnet, dass** die Beleuchtungseinrichtung (6) zumindest eine Entladungslampe, insbesondere eine Hochdruckentladungslampe (44) aufweist, die einer oder mehreren Fahrspuren zur Ausleuchtung des zu erfassenden Fahrzeuges () zugeordnet ist.

## Claims

1. Method for photographic imaging of a vehicle (2) to be detected by means of an image recording device (4), particularly in the event of speed limit violation, red light violation and/or distance monitoring, wherein an illumination device (6) is provided for illuminating the vehicle (2) during imaging, **characterized by** the steps:
- determining the respective location of the vehicle (2) to be detected in the imaging period by means of a location detecting device (14);
- controlling the radiation energy of the radiation coming from the illumination device depending on the detected location in order to illuminate the vehicle (2) to be detected with a defined light intensity.

2. Method according to claim 1, **characterized in that** the location recognition of the vehicle (2) to be detected is effected by means of at least one sensor scanning the roadway (10) in an angle range, preferably a laser or radar sensor.

3. Method according to claim 1 or 2, **characterized in that** the location recognition of the vehicle (2) to be detected is effected by means of a sensor arrangement (22) associated with the roadway, particularly a piezo and/or loop arrangement integrated into the road surface.

4. Method according to one of the preceding claims, **characterized in that** the control of the light intensity is effected by means of a radiation energy which is controlled depending on the distance of the vehicle (2) to be detected photographically from the image recording device (4).

5. Method according to one of the preceding claims, **characterized in that** the control of the light intensity is effected by means of a radiation energy which is controlled depending on an angle (δ) between a measuring axis extending towards the vehicle to be detected photographically and the roadside (8) and a reference axis (20) extending parallel to the roadside (8) respectively.

6. Method according to one of the preceding claims, **characterized in that** the radiation energy is controlled for illumination by limiting the switch-on time t_{lbr} of at least one light source (36, 44, 62) of the illumination device (6).

7. Method according to claim 6, **characterized in that** the flash triggering of the illumination device (6) is effected simultaneously with the triggering of the image recording device (4).

8. Method according to claim 6, **characterized in that** the triggering of the image recording device (4) is effected at a different time before or after a flash triggering.

9. Method according to one of the preceding claims, **characterized in that** the radiation energy is controlled by adjusting the optical axis (19) of the illumination device (6) depending on the determined location of the vehicle (2) to be detected photographically.

10. Method according to claim 9, **characterized in that** the beam angle (ε) of the illumination device (6) is modified depending on the distance of the vehicle (2) to be detected photographically in such a way that the vehicle to be detected is illuminated in a defined manner.

11. Method according to one of claims 9 or 10, **characterized in that** the optical axis (19) and/or the beam angle (ε) of the illumination device (6) is adjusted with at least one adjustable optical system associated with the light source.

12. Method according to one of the preceding claims, **characterized in that** the radiation energy is controlled for illumination, besides the location of the vehicle (2) to be detected, depending on at least one of the following parameters ambient brightness, exposure time and/or case of application.

13. Arrangement for photographic imaging of a vehicle (2) to be detected with an image recording device (4) for recording a vehicle (2) to be detected and an illumination device (6) for illuminating the vehicle (2) during imaging, and a location detecting device (14) for determining the respective location of the vehicle (2) to be detected, **characterized in that** the radiation energy of the illumination device (6) is controllable depending on the determined location in order to illuminate the vehicle (2) to be detected with a defined light intensity during imaging.

14. Arrangement according to claim 13, **characterized in that** the location detecting device (14) has at least one sensor scanning the roadway (10) in an angle range, preferably a laser or radar sensor, for location recognition of the vehicle (2) to be detected.

15. Arrangement according to claim 13 or 14, **characterized in that** the location detecting device (14) has a sensor arrangement (22) associated with the roadway (10), particularly a piezo and/or loop arrangement integrated into the road surface, for location recognition of the vehicle (2) to be detected.

16. Arrangement according to one of claims 13 to 15, **characterized in that** the illumination device (6) has a switching device (38) for limiting the switch-on time t_{lbr} of at least one light source (36, 44, 62) during the exposure time of the image recording device (4).

17. Arrangement according to claim 16, **characterized in that** the switching device (38) has a semiconductor element provided as switching element, particularly a transistor and/or a thyristor, for interrupting the supply voltage of the light source (44).

18. Arrangement according to one of claims 13 to 17, **characterized by** at least one voltage source (30), at least one charge storage device (34), particularly a capacitor, being arranged parallel to the voltage source (30) for power supply of the light source (36, 44, 62).

19. Arrangement according to one of claims 13 to 18, **characterized in that** the illumination device (6) has a switching power supply for generating voltage.

20. Arrangement according to one of claims 13 to 19, **characterized in that** the illumination device (6) has at least one adjustable optical system for adjusting the angle (δ) and/or limiting the beam angle (ε) of the light source (36, 44, 62) depending on the determined location of the vehicle (2) to be detected photographically.

21. Arrangement according to claim 20, **characterized in that** the optical system has at least one adjustable reflector for coordinate-dependent control of the radiation energy.

22. Arrangement according to claim 21, **characterized in that** the adjustable reflector has a mirror arrangement with a plurality of pivotable mirrors, preferably micro-mirrors.

23. Arrangement according to claim 22, **characterized by** piezo elements for controlling the mirrors.

24. Arrangement according to one of claims 13 to 23, **characterized in that** the illumination device (6) has at least one discharge lamp, particularly a high-pressure discharge lamp (44), which is associated with one or several lanes for illuminating the vehicle () to be detected.

## Revendications

1. Procédé d'imagerie photographique d'un véhicule (2) à détecter au moyen d'un dispositif d'enregistrement d'image (4), notamment en cas d'excès de vitesse, d'infraction de feu rouge et/ou de contrôle de distance, dans lequel un dispositif d'éclairage (6) est fourni pour éclairer le véhicule (2) pendant l'imagerie, **caractérisé par** les étapes suivantes:
- déterminer la position respective du véhicule (2) à détecter dans la période d'imagerie au moyen d'un dispositif de détection de position (14);
- contrôler l'énergie de rayonnement du rayonnement venant du dispositif d'éclairage en fonction de la position détectée pour éclairer le véhicule (2) à détecter avec une intensité de lumière définie.

2. Procédé selon la revendication 1, **caractérisé en ce que** la reconnaissance de position du véhicule (2) à détecter est effectuée au moyen d'au moins un capteur balayant la route (10) dans une zone angulaire, de préférence un capteur laser ou radar.

3. Procédé selon la revendication 1 ou 2, **caractérisé en ce que** la reconnaissance de position du véhicule (2) à détecter est effectuée au moyen d'un agencement de capteur (22) associé avec la route, notamment un agencement pièzo et/ou de boucle intégré dans la surface de route.

4. Procédé selon une des revendications précédentes, **caractérisé en ce que** le contrôle de l'intensité de lumière est effectué au moyen d'une énergie de rayonnement qui est contrôlée en fonction de la distance du véhicule (2) à détecter photographiquement du dispositif d'enregistrement d'image (4).

5. Procédé selon une des revendications précédentes, **caractérisé en ce que** le contrôle de l'intensité de lumière est effectué au moyen d'une énergie de rayonnement qui est contrôlée en fonction d'une angle (δ) entre une axe de mesure s'étendant vers le véhicule à détecter photographiquement et le bord de la route (8) ou une axe de référence (20) s'étendant parallèlement au bord de la route (8).

6. Procédé selon une des revendications précédentes, **caractérisé en ce que** l'énergie de rayonnement est contrôlée pour l'éclairage par une limitation de la durée d'allumage t_{lbr} d'au moins une source de lumière (36, 44, 62) du dispositif d'éclairage (6).

7. Procédé selon la revendication 6, **caractérisé en ce que** le déclenchement de flash du dispositif d'éclairage (6) est effectuée de façon simultanée avec le déclenchement du dispositif d'enregistrement d'image (4).

8. Procédé selon la revendication 6, **caractérisé en ce que** le déclenchement du dispositif d'enregistrement d'image (4) est effectué en temps différé avant ou après un déclenchement de flash.

9. Procédé selon une des revendications précédentes, **caractérisé en ce que** l'énergie de rayonnement est contrôlée en ajustant l'axe optique (19) du dispositif d'éclairage (6) en fonction de la position déterminée du véhicule (2) à détecter photographiquement.

10. Procédé selon la revendication 9, **caractérisé en ce que** l'angle de faisceau (ε) du dispositif d'éclairage (6) est modifié en fonction de la distance du véhicule (2) à détecter photographiquement de façon que le véhicule à détecter est éclairé d'une manière définie.

11. Procédé selon une des revendications 9 ou 10, **caractérisé en ce que** l'axe optique (19) et/ou l'angle de faisceau (ε) du dispositif d'éclairage (6) est ajusté avec au moins un système optique ajustable associé avec la source de lumière.

12. Procédé selon une des revendications précédentes, **caractérisé en ce que** l'énergie de rayonnement est contrôlée pour l'éclairage, outre la position du véhicule (2) à détecter, en fonction d'au moins un des paramètres suivants luminosité ambiante, temps d'exposition et/ou cas d'application.

13. Agencement d'imagerie photographique d'un véhicule (2) à détecter avec un dispositif d'enregistrement d'image (4) pour enregistrer un véhicule (2) à détecter et un dispositif d'éclairage (6) pour éclairer le véhicule (2) pendant l'imagerie, et un dispositif de détection de position (14) for déterminer la position respective du véhicule (2) à détecter, **caractérisé en ce que** l'énergie de rayonnement du dispositif d'éclairage (6) est contrôlable en fonction de la position déterminée pour éclairer le véhicule (2) à détecter avec une intensité de lumière définie pendant l'imagerie.

14. Agencement selon la revendication 13, **caractérisé en ce que** le dispositif de détection de position (14) a au moins un capteur balayant la route (10) dans une zone angulaire, de préférence un capteur laser ou radar, pour la reconnaissance de position du véhicule (2) à détecter.

15. Agencement selon la revendication 13 ou 14, **caractérisé en ce que** le dispositif de détection de position (14) a un agencement de capteur (22) associé avec la route (10), notamment un agencement pièzo et/ou de boucle intégré dans la surface de route, pour la reconnaissance de position du véhicule (2) à détecter.

16. Agencement selon une des revendications 13 à 15, **caractérisé en ce que** le dispositif d'éclairage (6) a un dispositif de commutation (38) pour limiter la durée d'allumage t_{lbr} d'au moins une source de lumière (36, 44, 62) pendant le temps d'exposition du dispositif d'enregistrement d'image (4).

17. Agencement selon la revendication 16, **caractérisé en ce que** le dispositif de commutation (38) a un élément semi-conducteur prévu comme élément de commutation, notamment un transistor et/ou un thyristor, pour interrompre la tension d'alimentation de la source de lumière (44).

18. Agencement selon une des revendications 13 à 17, **caractérisé par** au moins une source de tension (30), au moins un réservoir de charge (34), notamment un condensateur, étant disposé parallèlement à la source de tension (30) pour l'alimentation d'énergie de la source de lumière (36, 44, 62).

19. Agencement selon une des revendications 13 à 18, **caractérisé en ce que** le dispositif d'éclairage (6) a une alimentation à découpage pour générer de la tension.

20. Agencement selon une des revendications 13 à 19, **caractérisé en ce que** le dispositif d'éclairage (6) a au moins un système optique ajustable pour ajuster l'angle (δ) et/ou limiter l'angle de faisceau (ε) de la source de lumière (36, 44, 62) en fonction de la position déterminée du véhicule (2) à détecter photographiquement.

21. Agencement selon la revendication 20, **caractérisé en ce que** le système optique a au moins un réflecteur ajustable pour le contrôle de l'énergie de rayonnement dépendant de coordonnés.

22. Agencement selon la revendication 21, **caractérisé en ce que** le réflecteur ajustable a un agencement de miroir avec une pluralité de miroirs pivotables, de préférence de micro-miroirs.

23. Agencement selon la revendication 22, **caractérisé par** des éléments piezo pour contrôler les miroirs.

24. Agencement selon une des revendications 13 à 23, **caractérisé en ce que** le dispositif d'éclairage (6) a au moins une lampe à décharge, notamment une lampe à décharge à haute pression (44), qui est associée avec un ou plusieurs voies pour éclairer le véhicule () à détecter.
